# EUROPÄISCHE PATENTSCHRIFT

(11) **EP 1 039 141 B1**
(45) Veröffentlichungstag und Bekanntmachung des Hinweises auf die Patenterteilung: **26.10.2005**
(21) Anmeldenummer: 00106354.4
(22) Anmeldetag: 24.03.2000
(51) Int. Cl.: F04D 29/28

(54) **Verfahren zum Herstellen eines Laufrads**
Rotor manufacturing method
Procédé pour la fabrication d' une roue

(30) Priorität: 24.03.1999 DE 19913259
(43) Veröffentlichungstag der Anmeldung: 27.09.2000
(73) Patentinhaber: LTG Aktiengesellschaft, 70435 Stuttgart (DE)
(72) Erfinder: Fichter, Rolf, Dipl.-Ing., 70736 Fellbach (DE)
(74) Vertreter: Grosse, Rainer

(56) Entgegenhaltungen:
- DE-A- 1 965 868
- GB-A- 1 160 751
- US-A- 3 224 669
- US-A- 4 041 593

## Beschreibung

Die Erfindung betrifft ein Verfahren zum Herstellen eines Laufrads eines Ventilators gemäß Anspruch 1 sowie ein Laufrad für einen Ventilator gemäß Oberbegriff des Anspruchs 6.

Laufräder der hier angesprochenen Art sind bekannt (siehe DE-A-1 965 868). Sie umfassen Stützscheiben und Schaufellamellen, bei denen Aufnahmeöffnungen der Stützscheiben eingebracht sind. Zur Erhöhung des Widerstandsmoments gegen Biegung und Torsion ist es bekannt, das Laufrad mit einer durchgehenden Welle zur Aufnahme der Antriebskräfte auszustatten. Die im Inneren des Laufrads und somit im Luftführungsweg angeordnete Welle führt zu einer Beeinflussung der Luftströmung innerhalb des Laufrads, wodurch die Volumenstrom-Kennlinie in nicht gewünschter Weise verändert und der Wirkungsgrad des Querstromventilators reduziert werden. Ferner sind Stützscheiben und Schaufellamellen aufweisende Laufräder bekannt, die keine durchgehenden Wellen aufweisen. Bei diesen Laufrädern ist mindestens eine der Stützscheiben oder alternativ ein das Laufrad aufnehmendes Gehäuse mit einem Lagerzapfen zum drehbeweglichen Halten des Laufrads versehen, der mit einem Antrieb des Querstromventilators verbindbar ist.

Zum Verbinden der Lamellen mit den Stützscheiben ist bekannt, die Lamellen mit den Stützscheiben zu verschweißen oder zu verlöten. Des weiteren ist bekannt, zwei aneinander anliegende Stützscheiben, durch deren kreisabschnittförmige oder halbmondförmige Aufnahmeöffnungen die Lamellen hindurchgesteckt sind, mit zueinander versetzten Bohrungen zu versehen, in die Nieten eingebracht werden, so daß die Stützscheiben zueinander verschoben und die Lamellen dadurch in den Aufnahmeöffnungen klemmend gehalten werden. Das Einfädeln der Lamellen in die Aufnahmeöffnungen erweist sich als schwierig. Außerdem ist bekannt, die Stützscheibe an ihrem Umfang mit Hilfe von Rollen so zu verformen, daß das Fügespiel zwischen der Aufnahmeöffnung und der eingeschobenen Lamelle reduziert wird, bis die Lamelle klemmend in der Aufnahmeöffnung gehalten ist. Bei dieser Form der Klemmbefestigung wird nicht die Lamelle, sondern ausschließlich die Stützscheibe verformt, so daß auch nach dem Verbinden der Lamellen mit den Stützscheiben die Lamellen ihr vor dem Fügen besitzendes Querschnittsprofil aufweisen. Überdies bleibt festzuhalten, daß zwischen den Lamellen und den Stützscheiben nur ein Kraftschluß vorliegt. Nachteilig bei allen der bekannten Varianten zum Verbinden der Lamellen mit den Stützscheiben ist, daß diese Verfahren relativ aufwendig und somit kostenintensiv sind. Ferner hat sich gezeigt, daß bei diesen Verfahren zur Klemmfestlegung der Lamellen nicht in allen Fällen sämtliche Lamellen ausreichend eingeklemmt werden, so daß diese zumindest in bestimmten Betriebsphasen des Querstromventilators zum Klappern neigen.

Es ist daher Aufgabe der Erfindung, ein Laufrad und ein Verfahren zur Herstellung des Laufrads zu schaffen, die diese Nachteile nicht aufweisen.

Zur Lösung dieser Aufgabe wird ein Verfahren mit den Merkmalen des Anspruchs 1 vorgeschlagen. Das Verfahren sieht vor, zunächst die Lamellen axial in die Aufnahmeöffnungen der Stützscheiben einzuschieben und anschließend die Profilhöhe jeder Lamelle durch ihr plastisches Verformen im Bereich der Aufnahmeöffnung so zu vergrößern, daß sich die Lamelle in ihrer Aufnahmeöffnung verklemmt. Besonders vorteilhaft hierbei ist, daß große Toleranzen zwischen der Aufnahmeöffnung und der Lamelle realisiert werden können, so daß das axiale Einschieben der Lamelle in die Aufnahmeöffnungen bei der Montage einfach möglich ist. Durch die Profilhöhenvergrößerung kann auch ein großes Spiel zwischen Aufnahmeöffnung und Lamelle in vorteilhafter Weise kompensiert und eine kraft- und formschlüssige Verbindung zwischen Lamelle und Stützscheibe realisiert werden. Bei einer vorteilhaften Ausführungsvariante sind die Aufnahmeöffnungen für die Lamellen sichelförmig ausgebildet, wodurch engere Toleranzen (Fugenspiel) und somit ein besseres Anliegen der Lamellen am Rand der Aufnahmeöffnungen realisierbar sind, als bei kreisabschnitts- oder halbmondförmigen Aufnahmeöffnungen, wie sie bei den bekannten Laufrädern vorgesehen sind. Die Vergrößerung der Profilhöhe jeder der ein gekrümmtes Querschnittsprofil besitzenden Lamellen führt ferner auch zu einer Erhöhung der Steifigkeitseigenschaften, also des Widerstandsmoments gegen Biegung und Torsion, des Laufrads, da die Gewölbehöhe der gekrümmten Lamelle in dritter Potenz in das Widerstandsmoment eingeht.

Bei einer vorteilhaften Ausführungsform des Verfahrens ist vorgesehen, daß die plastische Verformung der Lamelle angrenzend an mindestens eine Seite, vorzugsweise an beiden Seiten, der Stützscheibe erfolgt. Hierdurch wird auch ein vorzugsweise nur kleiner, im Luftströmungspfad angeordneter Bereich der Lamelle örtlich begrenzt verformt, um die Klemmfestlegung der Lamelle in der Aufnahmeöffnung der Stützscheibe zu realisieren. Durch die mit der Verformung der Lamelle einhergehende örtlich begrenzte Querschnittsprofiländerung der Lamelle werden zwar die Volumenstrom-Kennlinie und der Wirkungsgrad des Ventilators vorzugsweise nur geringfügig beeinflußt beziehungsweise verringert, jedoch überwiegen die sich durch die Gewölbehöhenvergrößerung ergebenden Vorteile, wie zum Beispiel die Erhöhung der Steifigkeit des Laufrads.

Außerdem wird eine Ausführungsform des Verfahrens bevorzugt, die sich dadurch auszeichnet, daß sich für die plastische Verformung die Lamelle -im Querschnitt gesehen- an ihrer konvexen Oberseite in ihren beiden Randbereichen und an ihrer Unterseite in ihrer Mittelzone mit Verformungskräften beaufschlagt wird. Dadurch kann in vorteilhafter Weise eine kraft- und formschlüssige 3-Punkt-Einspannung beziehungsweise 3-Punkt-Abstützung der Lamelle am Rand der Aufnahmeöffnung realisiert werden. Aufgrund dieser sicheren Einspannung der Lamelle in der Aufnahmeöffnung sind hohe Widerstandsmomente des Laufrads realisierbar, was insbesondere bei den Laufrädern für Querstromventilatoren von Vorteil ist, die eine freitragende Konstruktion aufweisen und daher keine durchgehende Antriebswelle besitzen.

Weitere vorteilhafte Ausführungsformen des Verfahrens ergeben sich aus den übrigen Unteransprüchen.

Zur Lösung der Aufgabe wird auch ein Laufrad für einen Ventilator vorgeschlagen, das die Merkmale des Anspruchs 6 aufweist. Das Laufrad umfaßt mindestens zwei in einem Abstand zueinander angeordnete Stützscheiben und mehrere, Aufnahmeöffnungen der Stützscheiben durchgreifende, jeweils ein gekrümmtes Querschnittsprofil aufweisende Lamellen, die klemmend in den Aufnahmeöffnungen gehalten sind. Das Laufrad, vorzugsweise für einen Querstromventilator, Radialventilator oder Trommelläufer, zeichnet sich dadurch aus, daß sich jede Lamelle durch ihre Profilhöhe vergrößernde plastische Verformung im Bereich jeder Stützscheibe an dem Rand der Aufnahmeöffnung abstützt. Aufgrund dieser Ausgestaltung, also der Vergrößerung der Gewölbehöhe der Lamellen im Bereich der jeweiligen Stützscheibe, können die Steifigkeits- beziehungsweise Elastizitätseigenschaften des Laufrads, insbesondere das Widerstandsmoment gegen Biegung und Torsion, vergrößert werden. Im Zusammenhang mit der vorliegenden Erfindung wird unter einer "Abstützung" der Lamelle in der Aufnahmeöffnung verstanden, daß die aus einem eine gewisse Elastizität aufweisenden Material bestehende Lamelle über die Elastizitätsgrenze hinaus derart verformt wird, daß die Lamelle an mehreren Punkten und/oder Flächen des Aufnahmeöffnungsrands angedrückt ist. Die Vergrößerung der Profilhöhe führt also zu einem Einkeilen der Lamelle in der Aufnahmeöffnung.

Bevorzugt wird auch ein Ausführungsbeispiel des Laufrads, bei dem die Abstützung eine 3-Punkt-Abstützung ist. In diesem Zusammenhang wird unter dem Begriff "Punkt" nicht nur eine punktförmige Anlage der Lamelle am Rand der Aufnahmeöffnung verstanden, sondern auch eine flächige Anlage, wobei es möglich ist, daß beispielsweise nur an einer Stelle der 3-Punkt-Abstützung eine flächige Anlage vorliegt, während in den anderen beiden Anlagebereichen punktförmiger Kontakt gegeben ist. Durch die 3-Punkt-Abstützung kann ein Verkippen oder Verdrehen der Lamellen in der Aufnahmeöffnung, was zu störenden Geräuschen führen kann, vermieden werden.

Nach einer Weiterbildung der Erfindung ist vorgesehen, daß durch die Verformungskräfte für die plastische Verformung Prägeerhöhungen erzeugt werden, die an zumindest einer Seite, vorzugsweise an beiden Seiten jeder Stützscheibe anliegen. Auf der einer Prägeerhöhung aufweisenden Seite der Lamelle gegenüberliegenden Seite ist nach dem Verformungsvorgang eine an die Prägeerhöhung entsprechend angepaßte muldenförmige Vertiefung ausgebildet. Diese Prägeerhöhungen führen dazu, daß die Stützscheibe zwischen den Prägeerhöhungen klemmend gehalten ist, so daß eine Relativbewegung der Lamelle zumindest in axialer Richtung der Aufnahmeöffnung in der Stützscheibe verhindert und die Lamelle dadurch gegen ein Verlieren gesichert ist.

Außerdem wird ein Ausführungsbeispiel des Laufrads bevorzugt, das sich dadurch auszeichnet, daß der Rand der Aufnahmeöffnung in die Randbereiche der Lamelle zur Ausbildung eines Hintergriffs einschneidet. Durch die randoffenen Einschnitte in der Lamelle an deren der Aufnahmeöffnung angrenzenden Randbereichen werden Laschen beziehungsweise als Lasche dienende Verformungsbereiche der Lamelle gebildet, die derart umgeklappt oder lediglich umgebogen werden, daß der Hintergriff gebildet ist. Durch das Umbiegen dieser Randbereiche der Lamelle wird diese in der Aufnahmeöffnung in axialer Richtung der Aufnahmeöffnung fixiert, das heißt, unverschieblich gehalten.

Schließlich wird noch ein Ausführungsbeispiel des Laufrads bevorzugt, bei dem gegenüberliegende Zonen des Rands der Aufnahmeöffnung gegensinnig quer zur Ebene der Stützscheiben zur Vergrößerung der Einspannlänge der Lamelle verformt sind. Durch eine große Einspannlänge kann das Widerstandsmoment, also die Steifigkeit des Laufrads, vergrößert werden. In vorteilhafter Weiterbildung der Erfindung ist vorgesehen, daß die einander benachbarten Zonen des Rands zweier Aufnahmeöffnungen ebenfalls gegensinnig quer zur Ebene der Stützscheiben verformt sind. Die verformten Randzonen der Aufnahmeöffnung, die auf den Seitenflächen der Stützscheiben Vertiefungen oder Erhöhungen bilden, sind alternierend angeordnet, das heißt, daß -bei Betrachtung lediglich einer der Seitenflächen der Stützscheiben- eine muldenförmige Vertiefung zwischen zwei Erhöhungen angeordnet ist beziehungsweise eine Erhöhung zwischen zwei Vertiefungen.

Weitere Ausführungsformen des Laufrads ergeben sich aus den übrigen Unteransprüchen.

Die Erfindung wird im folgenden anhand der Zeichnungen näher erläutert. Es zeigen:
- Figur 1: eine perspektivische Darstellung eines ersten Ausführungsbeispiels eines Laufrads;
- Figur 2: einen stark vergrößerten Ausschnitt des in Figur 1 dargestellten Laufrads;
- Figuren 3A und 3B: einen Querschnitt durch ein Ausführungsbeispiel einer in eine Aufnahmeöffnung angeordneten Lamelle vor und nach ihrer plastischen Verformung;
- Figuren 4A bis 4C: verschiedene Ausführungsformen einer Aufnahmeöffnung in einer Stützscheibe für die Lamelle eines Laufrads;
- Figur 5: einen Ausschnitt eines Laufrads im Bereich einer Stützscheibe in Draufsicht auf die Oberseite einer Lamelle und
- Figur 6: eine Schnittdarstellung eines Teils einer Stützscheibe im Bereich einer Aufnahmeöffnung für eine in dieser angeordneten Lamelle.

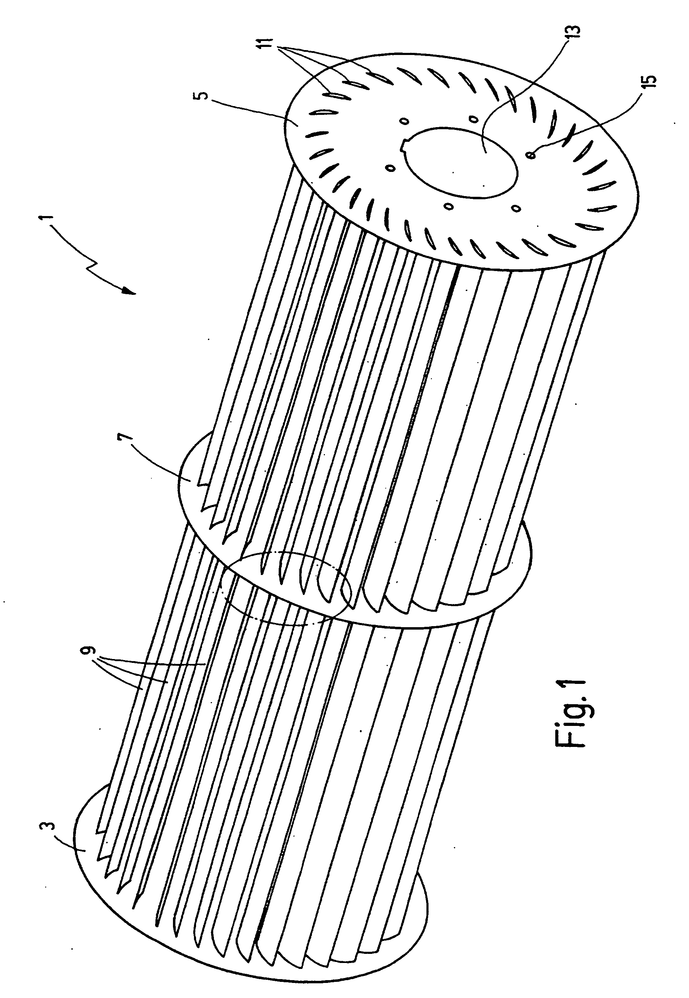

Figur 1 zeigt eine perspektivische Darstellung eines Ausführungsbeispiels eines Laufrads 1 für einen Querstromventilator, das eine erste Stützscheibe 3, eine zweite Stützscheibe 5 und eine dritte Stützscheibe 7 umfaßt, die in einem Abstand und parallel zueinander angeordnet sind. Die Funktion eines Laufrads für einen Querstromventilator ist bekannt, so daß diese hier nicht näher beschrieben wird. Des weiteren umfaßt das Laufrad 1 eine Anzahl von auch als Schaufeln bezeichneten Lamellen 9, die Aufnahmeöffnungen 11 in den Stützscheiben 3, 5, 7 durchgreifen. Die Aufnahmeöffnungen 11 sind in einem Abstand voneinander auf einem gedachten Kreis angeordnet.

Das Laufrad 1 weist eine freitragende Konstruktion auf, das heißt, es besitzt keine durchgehende Welle. Zum Aufbringen eines Drehmoments auf das Laufrad 1 wird eine mit einem Antrieb verbundene -in Figur 1 nicht dargestellte- Wellenbuchse an eine Seitenfläche einer der außenliegenden Stützscheiben 3, 5 angeflanscht. Hierfür sind zumindest in den Stützscheiben 3 und 5 mehrere um eine Durchbrechung 13 angeordnete Durchgangsöffnungen 15 vorgesehen. Vorzugsweise sind alle Stützscheiben 3, 5 und 7 des Laufrads 1 identisch ausgebildet, wodurch die Teilevielfalt des Laufrads 1 reduziert ist. Die dritte Stützscheibe 7 dient im wesentlichen dazu, die Steifigkeit der relativ langen Lamellen zu verbessern und hat daher auf die Lagerung des Laufrads wenn nur einen geringen Einfluß.

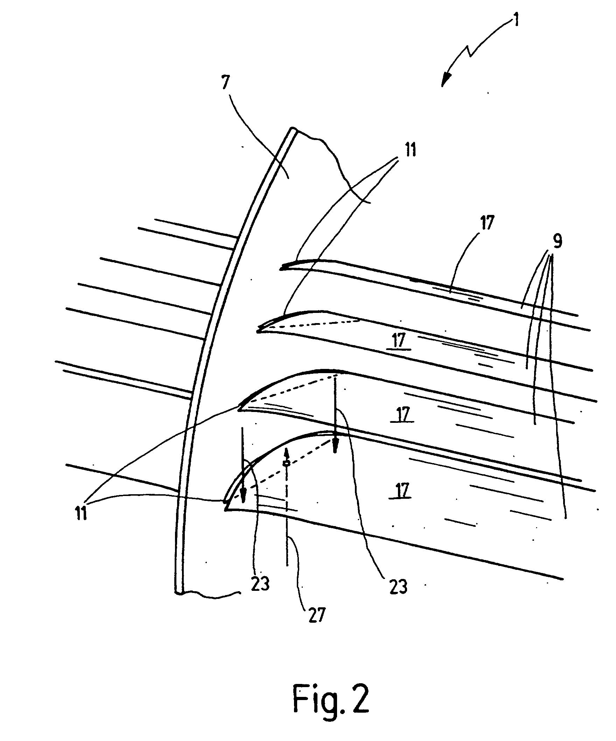

Figur 2 zeigt einen Ausschnitt des in Figur 1 dargestellten Laufrads 1 im Bereich der dritten, in etwa in der Mitte des Zwischenraums zwischen der ersten Stützscheibe 3 und der zweiten Stützscheibe 5 angeordneten Stützscheibe 7 im stark vergrößerten Maßstab. Es sind hier insgesamt vier Lamellen 9 erkennbar, die jeweils eine Aufnahmeöffnung 11 in der Stützscheibe 7 durchgreifen. Es ist ersichtlich, daß die Aufnahmeöffnungen 11 bei diesem Ausführungsbeispiel ein kreisabschnittförmiges Querschnittsprofil aufweisen, das im wesentlichen dem gekrümmten Querschnittsprofil der Lamellen 9 entspricht. Die Lamellen 9 sind in allen Stützscheiben 3, 5, 7 des Laufrads 1 klemmend in den Aufnahmeöffnungen 11 der Stützscheiben 3, 5, 7 gehalten. Die Klemmfestlegung der Lamellen 9 in den Aufnahmeöffnungen 11 erfolgt durch plastische Verformung der Lamelle 9 im Bereich jeder Stützscheibe, wodurch die Profilhöhe, also die Gewölbehöhe der ein gekrümmtes Querschnittsprofil aufweisenden Lamelle 9 vergrößert wird. Dadurch stützt sich die Lamelle 9 in der Aufnahmeöffnung 11 sicher ab.

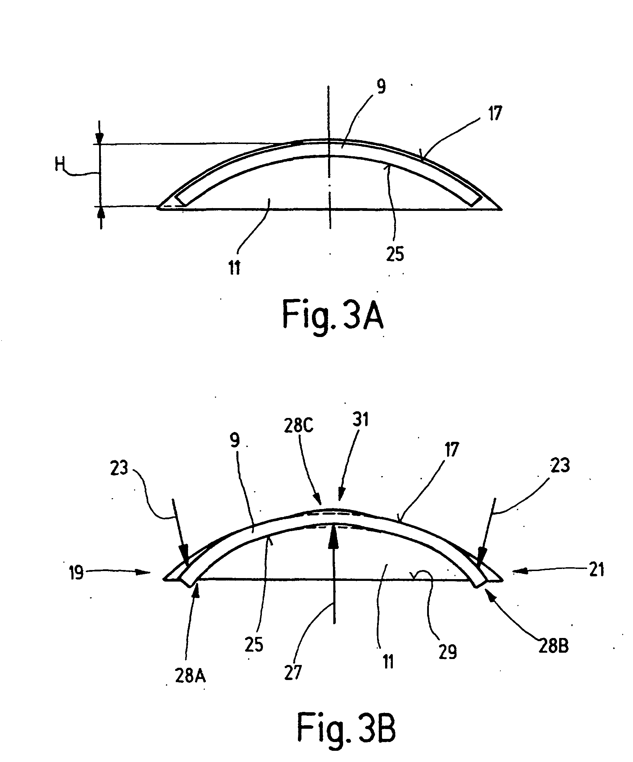

Im folgenden wird anhand der Figuren 3A und 3B die plastische Verformung der Lamelle 9 in der Aufnahmeöffnung 11 näher erläutert.

Figur 3A zeigt einen Querschnitt durch eine Aufnahmeöffnung 11 mit kreisabschnittförmigen Querschnittsprofil , in die eine ein gekrümmtes Querschnittsprofil aufweisende Lamelle 9 axial eingeschoben ist. Die Lamelle weist eine konstante Dicke auf. Es ist ersichtlich, daß die Krümmung der mit Spiel in der Aufnahmeöffnung 11 angeordneten Lamelle 9 der Bogenkontur der Aufnahmeöffnung 11 angepaßt ist, das heißt, die Ober- und Unterseite der Lamelle verlaufen parallel zum Bogen der Aufnahmeöffnung. Die Profilhöhe H₀ der Lamelle 9, die im mittleren Bereich der Lamelle gemessen wird, ist geringer als die lichte Höhe der Aufnahmeöffnung 11, so daß die Lamelle 9 mit Spiel in der Aufnahmeöffnung 11 angeordnet ist.

Zur Vergrößerung der Profilhöhe H wird die Lamelle 9, wie in Figur 3B dargestellt, an ihrer konvexen Oberseite 17 und an ihren beiden Randbereichen 19 und 21 mit mit Pfeilen 23 angedeuteten Verformungskräften und an ihrer konkaven Unterseite 25 mit mit einem Pfeil 27 dargestellten Verformungskräften beaufschlagt. Es ist ersichtlich, daß die auf die Oberseite 17 und die Unterseite 25 aufgebrachten Verformungskräfte im wesentlichen einander entgegen gerichtet sind. Das Laufrad ist während des Verformens der Lamelle im wesentlichen kraftfrei. Anders bei den aus dem Stand der Technik bekannten Laufrädern, bei denen zum Verbinden der Lamellen und der Stützscheiben miteinander die Stützscheiben mit Hilfe von Rollen mit großen, radial gerichteten Kräften beaufschlagt werden. Diese auf das Laufrad wirkenden Radialkräfte müssen von der Maschine zum Zusammenfügen des Laufrads abgestützt werden, wozu eine massive Konstruktion notwendig ist. Durch die Verformungskräfte wird die Gewölbehöhe der Lamelle 9 vergrößert, derart, daß sich eine 3-Punkt-Abstützung ergibt. Das heißt, die Lamelle 9 weist einen ersten Abstützpunkt 28A am Randbereich 19 der Lamelle 9, einen zweiten Abstützpunkt 28B an dem anderen Randbereich 21 der Lamelle und einen dritten Abstützpunkt 28C auf, wobei der dritte Abstützpunkt 28C ein Flächenbereich auf der konvexen Oberseite 17 der Lamelle 9 und die Abstützpunkte 28A und 28B punktförmige Zonen am geraden Randabschnitt der Aufnahmeöffnung 11 sind. Es wird deutlich, daß durch die plastische Verformung bei diesem Ausführungsbeispiel die Lamelle 9 mit ihren Randbereichen in den Rand 29 der Aufnahmeöffnung 11 einschneidet. Ferner ist in Figur 3B zu erkennen, daß die auf der Unterseite 27 der Lamelle 9 angreifenden Verformungskräfte derart hoch waren/sind, daß die Lamelle 9 in ihrer Mittelzone 31 geringfügig nach außen ausgebeult ist, ebenso der der Mittelzone 31 gegenüberliegende Randbereich der Aufnahmeöffnung 11.

Im Vergleich der Figuren 3A und 3B wird deutlich, daß durch die plastische Verformung der Lamelle 9 zur Klemmfestlegung in der Aufnahmeöffnung 11 im wesentlichen nur die Lamelle 9 verformt wurde. Die Aufnahmeöffnung 11 weist vor und nach dem Verformen der Lamelle 9 im wesentlichen das gleiche Querschnittsprofil auf. Es wird also anders wie bei herkömmlichen Laufrädern das Querschnittsprofil der Lamelle 9 verändert, insbesondere deren Profilhöhe H vergrößert. Dabei werden nur die unmittelbar der Aufnahmeöffnung angrenzenden Randbereiche der Lamelle durch die Verformungskräfte beeinflußt, das heißt verformt. Diese Verformung ist nur geringfügig und örtlich begrenzt, so daß sie auf den Wirkungsgrad des Laufrads und der Volumenstrom-Kennlinie nur einen geringen Einfluß aufweist.

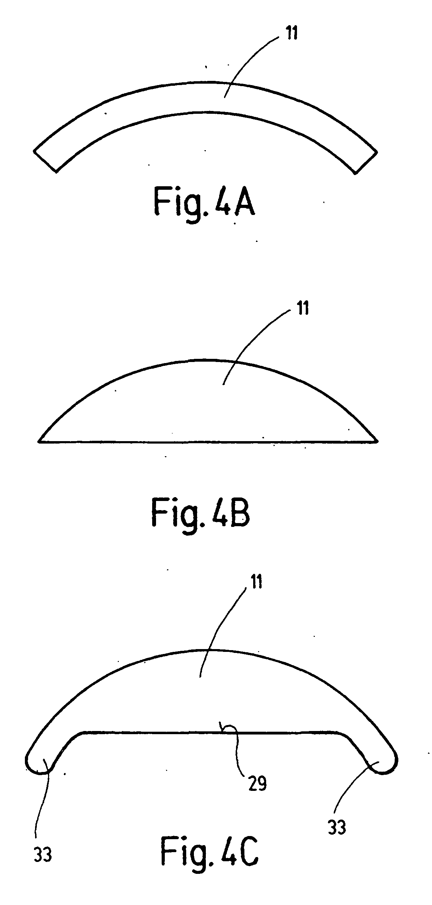

Figuren 4A, 4B und 4C zeigen jeweils einen Querschnitt durch ein Ausführungsbeispiel einer Aufnahmeöffnung 11. Bei dem in Figur 4A dargestellten Ausführungsbeispiel ist die Aufnahmeöffnung 11 sichelförmig ausgebildet, wobei das Querschnittsprofil der Aufnahmeöffnung 11. im wesentlichen dem der in die Aufnahmeöffnung 11 axial einschiebbaren Lamelle entspricht, bevor diese zur Klemmfestlegung in der Aufnahmeöffnung 11 plastisch verformt wird. Die in Figur 4B dargestellte Aufnahmeöffnung 11 weist ein kreisabschnittförmiges Profil auf, das dem der in den Figuren 3A und 3B dargestellten Aufnahmeöffnung 11 entspricht. Figur 4C zeigt eine Aufnahmeöffnung 11, die ein im wesentlichen kreisabschnittförmiges Querschnittsprofil aufweist. Im Bereich des geraden Randbereichs der Aufnahmeöffnung 11, also der Sehne des Kreisbogens, sind in beiden Randbereichen, in denen die Sehne und der Bogen des Kreisabschnitts miteinander verbunden sind, schlitzförmige Vertiefungen 33 eingebracht. Bei einer plastischen Verformung einer in die Aufnahmeöffnung 11 eingeschobenen Lamelle 9 wird diese vorzugsweise -wie anhand der Figuren 3A und 3B beschrieben- mit Verformungskräften beaufschlagt, die eine Gewölbevergrößerung der Lamelle 9 bewirken. Die Randbereiche 19 und 21 der Lamelle 9 werden in die Vertiefungen 33, vorzugsweise unter Ausbildung eines Formschlusses, eindrückt. Hierdurch kann eine gewünschte Abstützung, vorzugsweise 3-Punkt-Abstützung, der Lamelle 9 am Rand 29 der Aufnahmeöffnung 11 sichergestellt werden. Ferner wird die in der Aufnahmeöffnung 11 angeordnete Lamelle auch quer zur Einschieberichtung in der Aufnahmeöffnung fixiert.

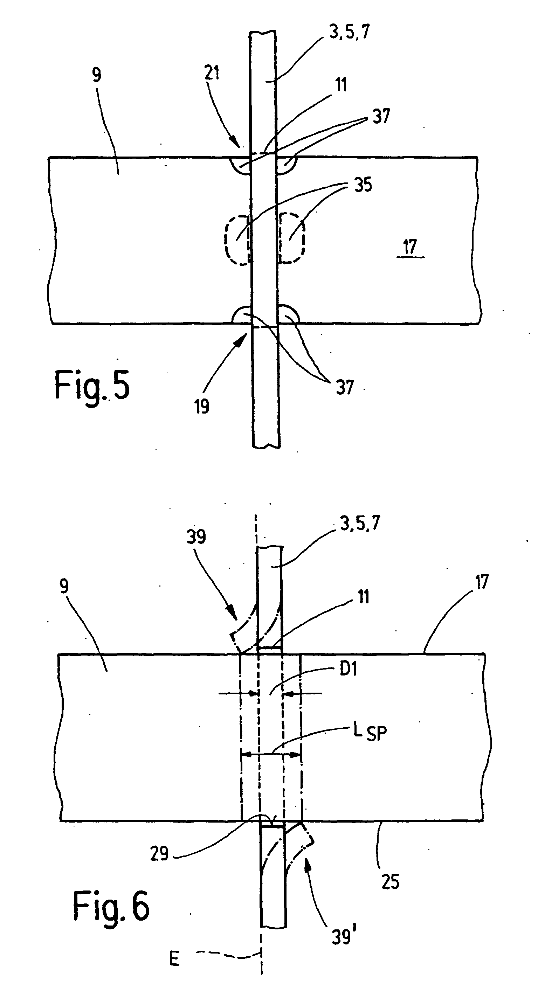

Figur 5 zeigt eine Draufsicht auf eine Lamelle 9, die in einer Aufnahmeöffnung 11 einer der Stützscheiben eines Laufrads mit vorzugsweise Spiel angeordnet ist. Im Bereich der Aufnahmeöffnung 11 sind auf beiden Seiten der Stützscheibe 3, 5 beziehungsweise 7 mit gestrichelter Linie Bereiche 35 angedeutet, in denen die in Figur 3B mit einem Pfeil 27 dargestellten Verformungskräfte an der Unterseite 25 der Lamelle 9 angreifen, um diese in gewünschter Weise zur form- und kraftschlüssigen Festlegung in der Aufnahmeöffnung 11 zu verformen. Ferner sind in den Randbereichen 19 und 21 der Lamelle 9 auf beiden Seiten der Stützscheibe 3, 5 beziehungsweise 7 mit durchgezogener Linie gedachte Bereiche 37 angedeutet, in denen die auf die konvexe Oberseite 17 der Lamelle 9 einwirkenden Verformungskräfte (Pfeil 23 in Figur 3B) angreifen. Aus Figur 5 ist ersichtlich, daß sich die Kraftangriffsbereiche 35 und 37 unmittelbar neben der Stützscheibe beziehungsweise an der Aufnahmeöffnung 11 auf beiden Seiten der Stützscheibe angeordnet sind.

Figur 6 zeigt einen Querschnitt durch eine Stützscheibe 3, 5 beziehungsweise 7 eines nicht näher dargestellten Laufrads, wie es anhand der vorangegangenen Figuren beschrieben ist, im Bereich einer Aufnahmeöffnung 11, in der eine Lamelle 9 angeordnet ist. Die Einspannlänge einer in der Aufnahmeöffung 11 angeordneten Lamelle 9 beträgt in den ebenen Bereichen der Stützscheibe 3, 5 beziehungsweise 7 in etwa der Dicke D₁ der Stützscheibe. Bei einer vorteilhaften Weiterbildung der Erfindung ist vorgesehen, daß zur Vergrößerung der Einspannlänge der Lamelle 9 diese auf gegenüberliegenden Zone 39 beziehungsweise 39' des Rands 29 der Aufnahmeöffnung 11 gegensinnig quer zur Ebene E der Stützscheibe 3, 5 beziehungsweise 7 verformt ist. Dadurch kann die Einspannlänge L_{SP} der Lamelle in der Aufnahmeöffnung in vorteilhafter Weise deutlich vergrößert werden, ohne daß dazu Stützscheiben mit einer größeren Dicke eingesetzt werden müssen. Durch das Einbringen von entsprechend ausgebildeter Ausformungen im Randbereich der Aufnahmeöffnung 11 kann die Steifigkeit des Laufrads vergrößert werden. Bei dem Ausführungsbeispiel gemäß Figur 6 beträgt die Dicke D₁ in etwa die Hälfte bis zwei Drittel der Einspannlänge L_{SP}.

Das Werkzeug, mit dem die Lamelle 9 -wie anhand der Figuren 3A und 3B beschrieben- plastisch verformt werden kann, ist zangenartig ausgebildet und in seinen Anlagebereichen an der Lamelle an die Querschnittsform der Lamelle entsprechend angepaßt. Beim Schließen der Zange werden vorzugsweise auf beiden Seiten der Stützscheibe flächenförmige Bereiche an der Unter- und Oberseite der Lamelle mit Verformungskräften beaufschlagt, die eine gewünschte plastische Verformung erzeugen.

Anhand der Beschreibung der Figuren 3 und 5 ergibt sich das erfindungsgemäße Verfahren ohne weiteres, das darin besteht, daß nachdem die Lamellen zunächst in die Aufnahmeöffnungen der Stützscheiben axial eingeschoben wurden, die Profilhöhe jeder Lamelle durch ihr plastisches Verformen im Bereich der Aufnahmeöffnung vergrößert wird, derart, daß sich die Lamelle in ihrer Aufnahmeöffnung verklemmt. Hierdurch ist eine relativ einfache Klemmbefestigung der Lamellen an den Stützscheiben möglich. Nach der plastischen Verformung ist eine Nachbehandlung des Laufrads nicht notwendig, so daß die Kosten für das Laufrad reduziert werden können. Das Laufrad zeichnet sich insbesondere durch eine hohe Festigkeit und vorzugsweise durch gute lufttechnische Werte aus, die besonders bei Laufrädern mit freitragender Konstruktion realisierbar sind.

Das einseitig oder zweiseitig drehbeweglich gelagerte Laufrad kann beispielsweise aus Edelstahl oder Aluminium hergestellt sein. Dadurch können trotz geringem spezifischen Laufradgewicht hohe Festigkeiten erzielt werden. Das Laufrad kann ein Querstromventilatorlaufrad, Radialventilatorlaufrad oder Trommelläuferlaufrad sein.

Ein weiterer Vorteil der plastischen Verformung der Lamelle zu deren Abstützung in der Aufnahmeöffnung ist, daß Lamellen mit einer geringeren Materialdikke verwendet werden können als bei verschweißten Laufrädern. Überdies kann in vorteilhafter Weise die Herstellung des Laufrads automatisiert werden kann. Ferner können Maschinen zum Zusammenfügen der Lamellen und Stützscheiben zu einem Laufrad mit einer leichten Konstruktion eingesetzt beziehungsweise realisiert werden.

## Patentansprüche

1. Verfahren zum Herstellen eines Laufrads eines Ventilators, das Stützscheiben und jeweils ein gekrümmtes- Querschnittsprofil besitzende Lamellen aufweist, mit folgenden Schritten:
- axiales Einschieben der Lamellen in Aufnahmeöffnungen der Stützscheiben,
- Vergrößerung der Profilhöhe jeder Lamelle durch ihr plastisches Verformen im Bereich der Aufnahmeöffnung derart, daß sich die Lamelle in ihrer Aufnahmeöffnung verklemmt.

2. Verfahren nach Anspruch 1, **dadurch gekennzeichnet, daß** die plastische Verformung der Lamelle angrenzend an beiden Seiten der Stützscheibe erfolgt.

3. Verfahren nach einem der vorhergehenden Ansprüche, **dadurch gekennzeichnet, daß** für die plastische Verformung die Lamelle -im Querschnitt gesehen- an ihrer konvexen Oberseite in ihren beiden Randbereichen und an ihrer Unterseite in ihrer Mittelzone mit Verformungskräften beaufschlagt wird.

4. Verfahren nach einem der vorhergehenden Ansprüche, **dadurch gekennzeichnet, daß** für die plastische Verformung die Lamelle -im Querschnitt gesehen- in ihren Randbereichen mit im wesentlichen aufeinander zu gerichteten Verformungskräften beaufschlagt wird.

5. Verfahren nach einem der vorhergehenden Ansprüche, **dadurch gekennzeichnet, daß** für die plastische Verformung der Lamelle -im Querschnitt geseheneiner ihrer Randbereiche mit einer Verformungskraft in Richtung des anderen Randbereichs beaufschlagt wird, wobei sich der andere Randbereich am Rand der Aufnahmeöffnung der Stützscheibe abstützt.

6. Laufrad für einen Ventilator, mit mindestens zwei in einem Abstand zueinander angeordneten Stützscheiben (3,5,7) und mehreren, Aufnahmeöffnungen (11) der Stützscheiben (3,5,7) durchgreifende, jeweils ein gekrümmtes Querschnittsprofil aufweisenden Lamellen (9), die klemmend in den Aufnahmeöffnungen (11) gehalten sind, **dadurch gekennzeichnet, daß** sich jede Lamelle (9) durch ihre Profilhöhe (H) vergrößernde plastische Verformung im Bereich jeder Stützscheibe (3,5,7) an dem Rand (29) der Aufnahmeöffnung (11) abstützt.

7. Laufrad nach Anspruch 6, **dadurch gekennzeichnet, daß** die Abstützung eine 3-Punkt-Abstützung ist.

8. Laufrad nach einem der vorhergehenden Ansprüche 6 oder 7, **dadurch gekennzeichnet, daß** die 3-Punkt-Abstützung -im Querschnitt gesehen- einen ersten Abstützpunkt an einem Randbereich (19) der Lamelle (9), einem zweiten Abstützpunkt an dem anderen Randbereich (21) der Lamelle (9) und einen dritten Abstützpunkt in der Mittelzone (31) der konvexen Oberseite (17) der Lamelle (9) aufweist.

9. Laufrad nach einem der vorhergehenden Ansprüche 6 bis 8, **dadurch gekennzeichnet, daß** durch die Verformungskräfte für die plastische Verformung Prägeerhöhungen erzeugt werden, die an zumindest einer Seite, vorzugsweise an beiden Seiten jeder Stützscheibe anliegen.

10. Laufrad nach einem der vorherigen Ansprüche 6 bis 9, **dadurch gekennzeichnet, daß** der Rand (29) der Aufnahmeöffnung (11) in die Randbereiche der Lamelle (9) zur Ausbildung eines Hintergriffs einschneidet.

11. Laufrad nach einem der vorhergehenden Ansprüche 6 bis 10, **dadurch gekennzeichnet, daß** gegenüberliegende Zonen des Rands (29) der Aufnahmeöffnung (11) gegensinnig quer zur Ebene der Stützscheiben (3,5,7) zur Vergrößerung der Einspannlänge der Lamelle (11) verformt sind.

12. Laufrad nach einem der vorhergehenden Ansprüche, **dadurch gekennzeichnet, daß** es ein Querstromventilatorlaufrad ist.

13. Laufrad nach einem der vorhergehenden Ansprüche, **dadurch gekennzeichnet, daß** es ein Radialventilatorlaufrad ist.

14. Laufrad nach einem der vorhergehenden Ansprüche, **dadurch gekennzeichnet, daß** es ein Trommelläuferlaufrad ist.

## Claims

1. Method for producing a rotor of a fan which has support disks and lamellae which each have a curved cross-sectional profile, comprising the following steps:
- pushing the lamellae axially into receiving openings in the support disks,
- increasing the profile height of each lamella by plastic deformation thereof in the region of the receiving opening, in such a manner that the lamella becomes clamped in its receiving opening.

2. Method according to claim 1, **characterized in that** the plastic deformation of the lamella takes place adjacent to both sides of the support disk.

3. Method according to one of the preceding claims, **characterized in that** for the plastic deformation the lamella - as seen in cross section - is subjected to deformation forces on its convex top side in its two edge regions and on its underside in its central zone.

4. Method according to one of the preceding claims, **characterized in that** for the plastic deformation the lamella - as seen in cross section - is subjected in its edge regions to deformation forces which are directed substantially toward one another.

5. Method according to one of the preceding claims, **characterized in that** for the plastic deformation of the lamella - as seen in cross section - one of its edge regions is subjected to a deformation force in the direction of the other edge region, the other edge region being supported on the edge of the receiving opening in the support disk.

6. Rotor for a fan, having at least two support disks (3, 5, 7) which are arranged at a distance from one another, and a plurality of lamellae (9) which pass through receiving openings (11) in the support disks (3, 5, 7), each have a curved cross-sectional profile and are held clamped in the receiving openings (11), **characterized in that** each lamella (9), as a result of plastic deformation which increases its profile height (H) in the region of each support disk (3, 5, 7), is supported on the edge (29) of the receiving opening (11).

7. Rotor according to claim 6, **characterized in that** the support is a three-point support.

8. Rotor according to one of the preceding claims 6 or 7, **characterized in that** the three-point support - as seen in cross section - has a first support point on an edge region (19) of the lamella (9), a second support point on the other edge region (21) of the lamella (9) and a third support point in the central zone (31) of the convex top side (17) of the lamella (9).

9. Rotor according to one of the preceding claims 6 to 8, **characterized in that** stamped elevations, which bear against at least one side, preferably against both sides, of each support disk, are produced by the deformation forces for the plastic deformation.

10. Rotor according to one of the preceding claims 6 to 9, **characterized in that** the edge (29) of the receiving opening (11) cuts into the edge regions of the lamella (9) so as to form an undercut.

11. Rotor according to one of the preceding claims 6 to 10, **characterized in that** opposite zones of the edge (29) of the receiving opening (11) are deformed in opposite directions, transversely with respect to the plane of the support disks (3, 5, 7), in order to increase the clamped-in length of the lamella (9).

12. Rotor according to one of the preceding claims, **characterized in that** it is a cross-flow fan rotor.

13. Rotor according to one of the preceding claims, **characterized in that** it is a radial fan rotor.

14. Rotor according to one of the preceding claims, **characterized in that** it is a cylindrical rotor.

## Revendications

1. Procédé pour la fabrication d'un rotor de ventilateur, laquelle présente des rondelles d'appui et des lamelles respectivement munies d'un profil incurvé en coupe transversale, avec les étapes suivantes :
- insertion axiale des lamelles dans les orifices récepteurs des rondelles d'appui ;
- allongement de la hauteur du profil de chaque lamelle par sa déformation plastique dans la zone de l'orifice récepteur de sorte que la lamelle se bloque dans son orifice récepteur.

2. Procédé selon la revendication 1, **caractérisé en ce que** la déformation plastique de la lamelle est contiguë, des deux côtés de la rondelle d'appui.

3. Procédé selon l'une quelconque des revendications précédentes, **caractérisé en ce que** pour la déformation plastique de la lamelle - vue en coupe transversale, des forces de déformation sont exercées sur sa face supérieure convexe dans les deux zones de bordure et sur sa face inférieure dans sa zone centrale.

4. Procédé selon l'une quelconque des revendications précédentes, **caractérisé en ce que** pour la déformation plastique de la lamelle - vue en coupe transversale, des forces de déformation essentiellement orientées l'une au-dessus de l'autre sont exercées dans ses zones de bordure.

5. Procédé selon l'une quelconque des revendications précédentes, **caractérisé en ce que** pour la déformation plastique de la lamelle - vue en coupe transversale, une force de déformation est appliquée sur une de ses zones de bordure en direction de l'autre zone de bordure, l'autre zone de bordure s'appuyant au bord de l'orifice récepteur de la rondelle d'appui.

6. Rotor de ventilateur, munie d'au moins deux rondelles d'appui (3,5,7) disposées à une certaine distance l'une de l'autre et de plusieurs lamelles (9) pénétrant les orifices récepteurs (11) des rondelles d'appui (3,5,7) et présentant respectivement un profil incurvé en coupe transversale, lesdites lamelles étant fixées par blocage dans les orifices récepteurs (11), **caractérisée en ce que** chaque lamelle (9) s'appuie au bord (29) de l'orifice récepteur (11) par l'intermédiaire de la déformation plastique allongeant la hauteur (H) de son profil dans la zone de chaque rondelle d'appui (3,5,7).

7. Rotor selon la revendication 6, **caractérisée en ce que** l'appui est un appui à 3 points.

8. Rotor selon l'une quelconque des revendications 6 ou 7, **caractérisée en ce que** l'appui en 3 points - vu en coupe transversale - est muni d'un point d'appui sur une zone de bordure (19) de la lamelle (9), d'un deuxième point d'appui sur l'autre zone de bordure (21) de la lamelle (9) et d'un troisième point d'appui dans la zone centrale (31) de la face supérieure (17) convexe de la lamelle (9).

9. Rotor selon l'une quelconque des revendications 6 à 8, **caractérisée en ce que** les forces de déformation plastique permettent de créer des allongements par estampage sur au moins un côté, de préférence sur les deux côtés de chaque rondelle d'appui.

10. Rotor selon l'une quelconque des revendications 6 à 9, **caractérisée en ce que** le bord (29) de l'orifice récepteur (11) rentre dans la zone de bordure de la lamelle (9), créant ainsi une prise arrière.

11. Rotor selon l'une quelconque des revendications 6 à 10, **caractérisée en ce que** les zones opposées du bord (29) de l'orifice récepteur (11) sont déformées dans le sens inverse, perpendiculairement au plan des rondelles d'appui (3,5,7) pour allonger la longueur de fixation de la lamelle (9).

12. Rotor selon l'une quelconque des revendications précédentes, **caractérisée en ce que** le rotor est un rotor de ventilateur à courant transversal.

13. Rotor selon l'une quelconque des revendications précédentes, **caractérisée en ce que** le rotor est un rotor de ventilateur radial.

14. Rotor selon l'une quelconque des revendications précédentes, **caractérisée en ce que** le rotor est un rotor de rotor cylindrique.
